(19) Europäisches Patentamt
European Patent Office
Office européen des brevets

(11) **EP 2 627 980 B1**

(12) **EUROPÄISCHE PATENTSCHRIFT**

(45) Veröffentlichungstag und Bekanntmachung des Hinweises auf die Patenterteilung:
**16.04.2014   Patentblatt 2014/16**

(21) Anmeldenummer: **11767930.8**

(22) Anmeldetag: **07.10.2011**

(51) Int Cl.:
*G01K 17/20* (2006.01)          *F22B 37/10* (2006.01)
*F22B 37/56* (2006.01)          *G01N 17/00* (2006.01)

(86) Internationale Anmeldenummer:
**PCT/EP2011/005019**

(87) Internationale Veröffentlichungsnummer:
**WO 2012/048822 (19.04.2012 Gazette 2012/16)**

(54) **VERFAHREN ZUR CHARAKTERISIERUNG VON BELAGSEIGENSCHAFTEN AUF WÄRMEÜBERTRAGUNGSFLÄCHEN IN DAMPFERZEUGERN**

METHOD FOR CHARACTERISING COATING PROPERTIES ON HEAT TRANSFER SURFACES IN STEAM GENERATORS

PROCÉDÉ POUR CARACTÉRISER LES PROPRIÉTÉS DE DÉPÔTS SUR DES SURFACES DE TRANSMISSION DE CHALEUR DANS DES GÉNÉRATEURS DE VAPEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2010   DE 102010048063**

(43) Veröffentlichungstag der Anmeldung:
**21.08.2013   Patentblatt 2013/34**

(73) Patentinhaber: **CheMin GmbH**
**86167 Augsburg (DE)**

(72) Erfinder:
• **SPIEGEL, Wolfgang**
**86415 Mering (DE)**
• **BECKMANN, Michael**
**01187 Dresden (DE)**
• **GRAHL, Sebastian**
**01099 Dresden (DE)**

(74) Vertreter: **Flaccus, Rolf-Dieter**
**Flaccus · Müller-Wolff**
**Patentanwälte**
**Bussardweg 10**
**50389 Wesseling (DE)**

(56) Entgegenhaltungen:
**EP-B1- 1 760 441       US-A1- 2009 262 777**

## Beschreibung

Die Erfindung betrifft ein Verfahren zur Charakterisierung von Belagseigenschaften auf Wärmeübertragungsflächen in Dampferzeugern unter Verwendung von Wärmestromdichtemesssignalen.

Im Verlauf einer Verbrennung von Brennstoffen zum Beispiel in einem Heizkessel wird dieser in der Regel von einem Belag aus Verbrennungsrückständen verunreinigt.

So bilden zum Beispiel die Begleitstoffe der Brennstoffe, seien es Chlor, Schwefel, Schwermetalle, Alkalien, Erdalkalien und andere Mineralien, in Abhängigkeit von den Verbrennungstemperaturen gas- und dampfförmige Verbindungen. Bei der Verbrennung zusätzlich entstehende inerte Stäube werden über diese kondensierenden Verbindungen eingebunden und bilden Beläge an festen Strukturen, wie z.B. den Wänden des Heizkessels. Diese Beläge behindern sowohl in den Strahlungszügen als auch in den konvektiven Zügen den Wärmeübergang vom Rauchgas auf die Heizflächen. In den konvektiven Zügen wird durch die Beläge zusätzlich der freie Abzug der Rauchgase behindert. Insbesondere, wenn die Wärme des Heizkessels nach außen dringen soll, oder ein in den Wänden fließendes Kühlmittel erhitzen soll, sind solche Beläge folglich unerwünscht.

Im Folgenden wird zur Verbesserung der Verständlichkeit mit dem Begriff 'Heizfläche' allgemein ein Element bezeichnet, welches zwei unterschiedlich temperierte Medien stoffundurchlässig voneinander trennt und dessen Geometrie beliebig ausgebildet sein kann. Insbesondere wird als Heizfläche ein Element bezeichnet, das den Bereich einer Brennkammer zu einem anderen Bereich abschließt. Dies kann zum einen eine Außenwandung sein, wie zum Beispiel eine Membranwand, jedoch fällt unter den Begriff auch ein Heizelement im Inneren der Brennkammer, zum Beispiel ein Kühlwasserdurchflossenes Rohr oder eine innere Wand, die einen von der Brennkammer separierten Raum umschließt.

EP 1 760 441 B1 beschreibt eine Möglichkeit, durch Messung des spezifischen Wärmeflusses an Dampferzeugern zu ermitteln, ob solch ein Belag im Inneren einer Heizkammer entstanden ist. Das Patent beruht auf folgendem Prinzip: Die Aufpunktung von Thermoelementen an der Kesselaußenseite, je eines Thermoelementes auf dem Rohrscheitel und dem benachbarten Steg, liefert ein Messsignal, wobei sich mittels der beiden Konstandrähte der Thermoelemente der Unterschied der Temperaturen zwischen Rohr und Steg ermitteln lässt und damit ein Äquivalent zur gegebenen Wärmestromdichte an der Messposition bestimmt werden kann.

Die Nutzung der beiden Konstantandrähte und des Kessels als "Eisendraht" anstelle der beiden Thermoelemente erlaubt die Messung des Temperaturunterschiedes zwischen Rohr und Steg mit hoher Genauigkeit (1/100 Kelvin) bei gleichzeitig hoher Temperatur (meist ca. 250-300 °C).

Nachteil der bisherigen Verfahren ist, dass die Eigenschaften des Belags, wie zum Beispiel seine Zusammensetzung oder seine Dicke ohne einen Zugang zum Inneren der Brennkammer bisher nicht ermittelt werden können.

Für zyklische Temperaturschwankungen von idealisierten Flächen, z. B. in Verbrennungsmaschinen und den oberflächennahen Bereich der Erdkruste gilt die folgende Theorie (siehe Gröber, Heinrich, Erk, Siegmund und Grigull, Ulrich. Die Grundgesetze der Wärmeübertragung. 3. Auflage. Berlin, Heidelberg, New York : Springer-Verlag, 1988. 3-540-02982-6).

Allgemein gilt zunächst für den periodischen, zeitabhängigen Wärmeeintrag in ein System, dass sich die Temperatur des an die Körperoberfläche angrenzenden Fluids und damit die eingebrachte Wärmestromdichte nach einem periodischen Zeitgesetz ändert.

$$\vartheta_F = \vartheta_m + \Delta\vartheta \cdot \cos(\omega \cdot \tau)$$

Hierbei bezeichnet $\vartheta_m$ eine konstante Mitteltemperatur, $\Delta\vartheta$ die Temperaturschwankungsamplitude, $\tau$ die Zeitdauer, von einem beliebigen Zeitpunkt $t_0$ bis zum Zeitpunkt t gezählt sowie $\omega$ die Kreisfrequenz der

Schwingung oder Teilschwingung des Wärmeeintrags, welche wiederum mit

$$\omega = 2\pi \cdot f = 2\pi \frac{1}{\tau_0}$$

von der Frequenz f bzw. der Dauer einer Periode $\tau_0$ abhängig ist.

Die Kosinusfunktion kann durch eine Phasenverschiebung von $0,25\pi$ in eine Sinusfunktion mit gleichwertigen Bedingungen überführt werden, weshalb für die weiteren Rechenschritte nur die Kosinusfunktion berücksichtigt wird.

Geht man dabei für den Belag von einem einseitig unendlich ausgedehnten Körper aus, bei dem Homogenität und Isotropie vorausgesetzt wird, muss das Temperaturfeld in der Belagsschicht der Fourierschen Differentialgleichung

$$\frac{\partial \vartheta}{\partial t} = a \frac{\partial^2 \vartheta}{\partial x^2}$$

mit der Ortskoordinate x und der Temperaturleitfähigkeit α genügen. Die Annahme eines einseitig unendlich ausgedehnten Körpers auch bei geringer Belagsstärke kann deshalb getroffen werden, weil die Temperaturschwingungen rasch erfolgen und die Kühlmitteltemperatur in oder an den Heizflächen einen konstanten Wert beträgt.

Für das Temperaturfeld wird die Randbedingung 3. Art vorgegeben, woraus folgt, dass für den Wärmeübergang an der Oberfläche des Belags (x=0) folgende Beziehung gelten muss:

$$\alpha\big(\vartheta_F - \vartheta(0,\tau)\big) = -\lambda \left(\frac{\partial \vartheta}{\partial x}\right)_{x=0}.$$

Darin ist mit λ der Wärmeleitkoeffizient des Belagsmaterials sowie mit α der effektive Wärmeübergangskoeffizient bezeichnet, der sowohl die konvektiv übertragene Wärme beinhaltet, als auch äquivalent den Anteil der an der Oberfläche effektiv eingetragenen Strahlungswärme.

Wird weiterhin die Temperaturleitfähigkeit durch den Ausdruck

$$a = \frac{\lambda}{\varrho \cdot c}$$

ersetzt, so ist der Verlauf des Temperaturfeldes schließlich abhängig von der mittleren Temperatur im Feuerraum, der Temperaturschwankungsamplitude, der Periodendauer und den Stoffeigenschaften der Belagsschicht, die in der Temperaturleitfähigkeit zusammengefasst werden können. Gelingt es also aus den Temperaturschwankungen bzw. aus der Schwankung der Wärmestromdichte die Temperaturleitfähigkeit zu ermitteln, kann somit eine Aussage über die Eigenschaften des Belags getroffen werden. In einem weiteren Schritt sind dann mindestens zwei der drei in der Temperaturleitfähigkeit enthaltenen Stoffeigenschaften zu ermitteln, um eine genauere Aussage über die Art des Belags zu ermöglichen.

Über partikuläre Integrale, die durch Probieren zu finden sind, kann schließlich die Gleichung für das Temperaturfeld ermittelt werden. Diese lautet nach Einsetzen der Randbedingungen an der Stelle der Oberfläche des Belags (x=0) für das Temperaturfeld:

$$\vartheta(x,\tau)_{\tau \to \infty} = \vartheta_m + \frac{\Delta\vartheta \cdot exp(-\xi)}{\sqrt{1 + 2\beta + 2\beta^2}} cos(\omega \cdot \tau - \varepsilon - \xi)$$

dabei ist

$$\varepsilon = arctan\left(\frac{\beta}{1+\beta}\right)_{mit} \quad \beta = \frac{\lambda}{\alpha}\sqrt{\frac{\pi}{a \cdot \tau_0}} = \frac{\lambda}{\alpha}\sqrt{\frac{\omega}{2a}} = \frac{b}{\alpha}\sqrt{\frac{\pi}{\tau_0}}$$

und

$$\xi = x \sqrt{\frac{\pi}{a \cdot \tau_0}} = x \sqrt{\frac{\omega}{2a}}$$

Die Abwandlung der Gleichung für β enthält zudem den Wärmeeindringkoeffizienten $b = \sqrt{\lambda \cdot \rho \cdot c}$.

Die bisherige Betrachtung erfolgt in strenger Anlehnung an die Literatur, in denen sich die Ausführungen und Beispiele jedoch nur auf den Fall einer Temperaturschwingung bei einem einseitig unendlich ausgedehnten Körper beziehen, der aufgrund einer nicht vernachlässigbaren Wärmeleitfähigkeit einen unendlichen großen Wärmeleitwiderstand besitzt. Dieser führt dazu, dass keine Wärme durch den Körper transportiert wird.

Aufgabe der vorliegenden Erfindung war es, ein Verfahren zur Verfügung zu stellen, das die bisherigen Nachteile überwindet und mit dem die Eigenschaften eines Belages auf Heizflächen im Inneren einer Brennkammer ermittelt werden können, ohne dass ein Zugang zum Innenraum dieser Kammer während der Messungen nötig ist.

Diese Aufgabe wird durch ein Verfahren nach Anspruch 1 gelöst.

Unabhängig vom Einfluss der Eindringtiefe x wirkt sich der Wärmeübergangskoeffizient α auf die Amplitude und Phasenverschiebung der Temperaturschwingung aus. Für den Grenzfall eines unendlich großen Wertes für den Wärmeübergangskoeffizient α verschwindet dieser Einfluss.

In der Praxis liegt der Wärmeübergangskoeffizient α jedoch weitaus niedriger und mit sinkendem Wert treten für die Schwingung der Temperatur zunehmend eine Verschiebung der Phase sowie eine Dämpfung der Amplitude auf. Insgesamt lässt sich aber das Temperaturfeld durch die in der Temperaturleitfähigkeit von α bzw. im Wärmeeindringkoeffizienten b zusammengefassten Stoffwerte für Dichte ρ, spezifische Wärmekapazität c und Wärmeleitfähigkeit λ des Belags sowie mit der Temperaturschwingung des an den Belag angrenzenden Fluids und zusätzlich mit der Eindringtiefe x sowie dem Wärmeübergangskoeffizienten α bestimmen.

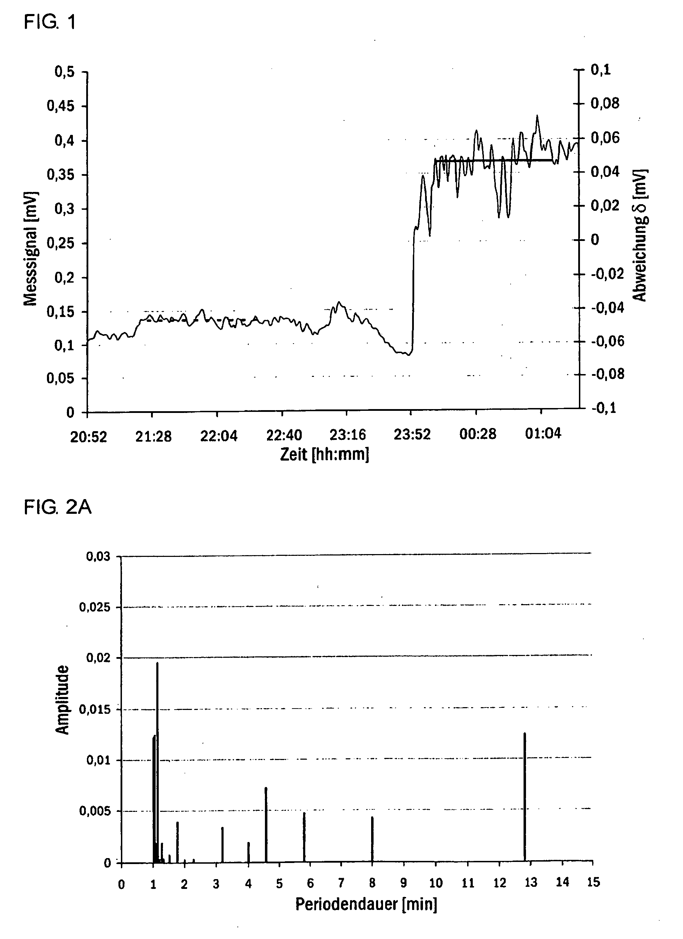

Misst man die Wärmestromdichte an einer Heizfläche einer Brennkammer und trägt die Messwerte gegen die Zeit auf, ergibt sich ein Bild wie in Figur 1 dargestellt wird. Dabei weist hier zunächst die Heizfläche einen Belag auf, der mit der Zeit zunahm, und der um 23:52 Uhr entfernt wurde.

Deutlich lässt sich in Figur 1 aus dem Signalverlauf der Wärmestromdichte eine Abhängigkeit dieser Größe von der Belagsbildung auf die Heizfläche in der Brennkammer erkennen. Der mit der Zeit zunehmende Belag stellt zum einen einen Wärmeleitwiderstand dar, der abhängig von seinen Materialeigenschaften sowie der Schichtdicke zu einem geringeren Wärmestrom und damit zu einem niedrigeren Messsignalniveau führt.

Zum anderen ergibt sich daraus ein materialabhängiges Wärmespeicher- sowie Wärmetransportvermögen, wodurch bei einer aufgeprägten Schwankung der Wärmestromdichte ein dämpfender Einfluss auf die Temperaturdifferenzschwankung und eine Phasenverschiebung resultiert.

Somit ist es möglich, Informationen zur Belagssituation aus solchen Messungen abzuleiten, nämlich aus dem Amplituden- und Frequenzspektrum sowie bei hinreichend hoher zeitlicher Auflösung auch aus der Phasenverschiebung des Messsignals. Links in Figur 1 ist die isolierende und speichernde Wirkung eines Belags anhand der vergleichsweise großen Signaldämpfung und niedrigen Wärmestromdichte anhand des niedrigeren Messsignalniveaus zu erkennen. Auf der rechten Seite von Figur 1 hingegen erreicht im sauberem Zustand der Heizfläche das Messsignal ein im Vergleich höheres Niveau und die Dämpfung der Amplitude ist entsprechend kleiner.

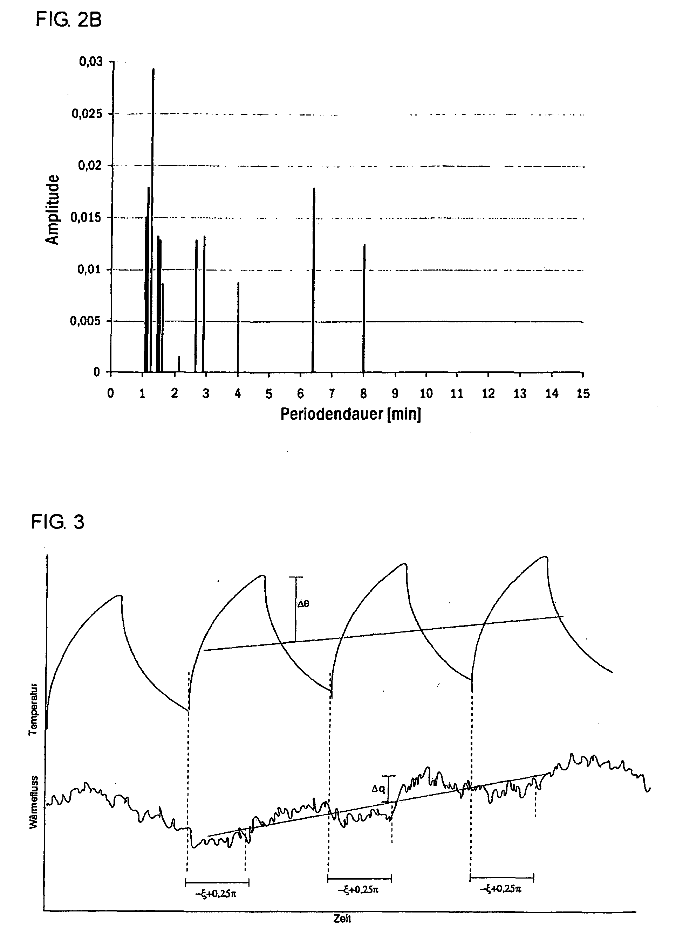

Figur 2A und Figur 2B zeigen das Amplitudenspektrum einer diskreten Foufieranalyse der Fluktuationen für die in Figur 1 dargestellten belegten (Figur 2A) und sauberen (Figur 2B) Bereiche. Im Gegensatz zum belegten Fall ergibt die Analyse im sauberen Fall eine höhere Anzahl von Frequenzen mit ähnlicher Amplitude im Zeitintervall zwischen ein und zwei Minuten.

Ein großer Unterschied zur theoretischen Betrachtung für einen einseitig unendlich ausgedehnten Körper besteht in einem Temperaturgradienten für die mittlere Temperatur $\vartheta_m$ in der Heizfläche, aus welchem der übertragene mittlere Wärmestrom errechnet werden kann. Ist der Gradient der Temperatur Null, so wird wie im ersteren Fall keine Wärme durch den Körper transportiert. Die Theorie muss deshalb in diesem Falle um die Abhängigkeit der mittleren Temperatur $\vartheta_m$ von der örtlichen Lage im Körper sowie von der im Mittel übertragenen Wärmemenge $\dot{q}_m$ auf das Kühlmedium erweitert werden.

Für den hier vorliegenden Fall der Wärmeabfuhr durch das Kühlmedium gilt deshalb anders als bei der idealisierten theoretischen Betrachtung

$$\vartheta(x,\tau)_{\tau\to\infty} = \vartheta_{m,B,a} - \frac{x}{\lambda}\dot{q}_m + \frac{\Delta\vartheta \cdot exp(-\xi)}{\sqrt{1+2\beta+2\beta^2}}cos(\omega\cdot\tau-\varepsilon-\xi)$$

(Gleichung 1)

Die Größe x ist dabei nach wie vor eine Position relativ zur Dicke des Belages.

Die Kreisfrequenz ω ist dabei die Kreisfrequenz einer gezielt angelegten Schwingung der Wärmeleistung in der Brennkammer, z. B. durch gezielte Änderung der Leistung der Wärmezufuhr oder die Kreisfrequenz einer Teilschwingung oder eines der Terme nach Laplace- oder Fourierzerlegung der Messwerte. Durch eine solche Zerlegung kann auch eine unregelmäßige Variation der auf die Heizfläche aufgebrachten Wärmeleistung, z. B. durch eine unregelmäßige Verbrennung, zur Ermittlung der Belagseigenschaften verwendet werden.

Für die Oberflächentemperatur der Belagsschicht, an der Stelle x=0, was der der Brennkammer zugewandten Oberfläche des Belags entspricht, reduziert sich die Gleichung 1 zu

$$\vartheta_0 = \vartheta_{m,B,a} + \frac{\Delta\vartheta}{\sqrt{1+2\beta+2\beta^2}}cos(\omega\cdot\tau-\varepsilon)$$

(Gleichung 2)

Der Wärmefluss ist entsprechend

$$\dot{q}(x,\tau) = \dot{q}_m + \frac{\Delta\vartheta\cdot b\cdot\sqrt{\omega}\cdot e^{-\xi}}{\sqrt{1+2\beta+2\beta^2}}cos\left(\omega\cdot\tau-\varepsilon-\xi+\frac{\pi}{4}\right)$$

(Gleichung 3)

dabei ist

$$\dot{q}_m = \frac{\lambda}{x_{B,i}-x_{B,a}}\left(\vartheta_{m,B,a}-\vartheta_{m,B,i}\right)$$

(Gleichung 4)

die mittlere Wärmestromdichte durch die Membranwand, die aus den Messwerten ermittelt wird, $\vartheta_{m,B,a}$ die mittlere Temperatur an der Belagsoberfläche und $\vartheta_{m,B,i}$ die mittlere Temperatur zwischen Belag und Heizfläche, und wiederum

$$\varepsilon = arctan\left(\frac{\beta}{1+\beta}\right) \text{ mit } \beta = \frac{\lambda}{\alpha}\sqrt{\frac{\pi}{a\cdot\tau_0}} = \frac{\lambda}{\alpha}\sqrt{\frac{\omega}{2a}} = \frac{b}{\alpha}\sqrt{\frac{\pi}{\tau_0}}$$

und

$$\xi = x \sqrt{\frac{\pi}{a \cdot \tau_0}} = x \frac{b}{\lambda} \sqrt{\frac{\pi}{\tau_0}} = x \sqrt{\frac{\omega}{2a}}$$

.

Werden Temperatur oder Wärmefluss bei verschiedenen Werten x gemessen, sind die gemessenen Verläufe zueinander phasenverschoben. Aus dieser Phasenverschiebung kann somit der Wert $\xi$ berechnet werden.

Zum Beispiel ist der gemessene Wärmefluss, wie aus den Gleichungen zu $\vartheta_0(\tau)$ und $\dot{q}(x,\tau)$ unschwer zu erkennen ist, gegenüber der Temperaturschwingung im Feuerraum um $-\xi+0{,}25\pi$ phasenverschoben.

Somit kann aus dem Vergleich der gemessenen Temperatur und dem gemessenen Wärmefluss die Größe $\xi$ eindeutig ermittelt werden, in dem die Phasenverschiebung zwischen der Temperatur in der Brennkammer $\vartheta_0(\tau)$ und dem Wärmefluss $\dot{q}(x,\tau)$ während des Zeitintervalls $\tau$ bestimmt wird.

Mit $\xi$ kann nun der Wärmeeindringkoeffizient b aus dem Amplitudenvergleich der Temperatur an der Oberfläche des Belags $\vartheta_0(\tau)$ und des Wärmeflusses am Übergang zwischen Belag und Heizflächenoberfläche $\dot{q}(x, \tau)$ während des Zeitintervalls $\tau$ ermittelt werden. Es ist

$$b = \frac{\hat{q}(\delta_B, \tau_2)}{\hat{\vartheta}(0, \tau_1)} \sqrt{\frac{1}{\omega}} e^{\xi}$$

mit der Amplitude der Wärmestromdichte am Übergang zwischen Belag und Heizfläche

$$\hat{q}(\delta_B, \tau_2) = \frac{\Delta\vartheta \cdot b \cdot \sqrt{\omega} \cdot e^{-\xi}}{\sqrt{1 + 2\beta + 2\beta^2}}$$

,

der Amplitude der Oberflächentemperatur des Belags

$$\hat{\vartheta}(0, \tau_1) = \frac{\Delta\vartheta}{\sqrt{1 + 2\beta + 2\beta^2}}$$

,

dem Proportionalitätsfaktor zwischen den beiden Amplituden $\omega^{-0{,}5}$ sowie der Korrektur der Dämpfung durch den Belag zwischen Temperatur- und Wärmestromschwingung $e^{\xi}$.

Ist in einer bevorzugten Ausführungsform zusätzlich zu dem Verlauf des Wärmeflusses an einer bestimmten Position x auch der Temperaturverlauf an dieser Position bestimmt worden, wird der Wärmeeindringkoeffizient b bevorzugt aus einem Vergleich der Amplituden dieser beiden Verläufe nach

$$b = \frac{\hat{q}(x, \tau_2)}{\hat{\vartheta}(x, \tau_1)} \sqrt{\frac{1}{\omega}}$$

berechnet, wobei hier der Nenner die Amplitude des Temperaturverlauf an der Position x darstellt.

Aus dem Wärmeeindringkoeffizienten b lässt sich nun die Wärmeleitfähigkeit $\lambda$ in Abhängigkeit der Schichtdicke $\delta_B$ des Belags bestimmen. Die einzelnen Größen ergeben sich aus den Formeln

$$\lambda = \frac{\delta_B}{\xi} b \sqrt{\frac{\omega}{2}} \quad \text{und} \quad \delta_B = \frac{\lambda}{\dot{q}_m}\left(\vartheta_{m,B,a} - \vartheta_{m,B,i}\right)$$

Dabei ist $\dot{q}_m$ die über die aus den Messwerten gebildete mittlere Wärmestromdichte durch die Heizfläche und $\vartheta_{m,B,a}$ und $\vartheta_{m,B,i}$ die mittleren Temperaturen an der Belagsoberfläche (a) und zwischen Belag und Membranwandaufbau (i). Eine der Größen $\vartheta_{m,B,a}$ und $\vartheta_{m,B,i}$ kann aus der anderen nach den Gleichungen 1 und 2 bei bekanntem $\dot{q}_m$ berechnet werden. Jedoch ist eine direkte Ermittlung beider Größen aus zwei entsprechenden Temperaturverläufen bevorzugt.

Die jeweils unbekannte Größe Wärmeleitfähigkeit $\lambda$ oder Schichtdicke $\delta_B$ kann dabei abgeschätzt oder durch Referenzwerte einer Datenbank ermittelt werden. In einer bevorzugten Ausführungsform werden zusätzlich zu den Messungen an zwei unterschiedlichen Positionen $x_1$ und $x_2$ noch Messungen des Temperaturverlaufs und/oder des Wärmeflusses an mindestens einer weiteren Position $x_3$ vorgenommen und ebenfalls b relativ zu dieser Messung bestimmt. Mittels dieser zusätzlichen Informationen können dann, da b immer denselben Wert annehmen muss, die Wärmeleitfähigkeit $\lambda$ und die Schichtdicke $\delta_B$ rechnerisch bestimmt werden.

Nach entsprechenden Umformungen der Gleichung zur Berechnung von $\xi$ lassen sich nun aus den oben aufgeführten Formeln die Temperaturleitfähigkeit $\alpha$ sowie die volumetrische Wärmekapazität $\rho \cdot c$ ermitteln.

Bei dem erfindungsgemäßen Verfahren wird in einem ersten Schritt zumindest der Temperaturverlauf an einer Position $x_1$ und der Verlauf des Wärmeflusses an einer weiteren Position $x_2$ ermittelt.

Vorzugsweise wird zusätzlich an der Position $x_1$ auch der Verlauf des Wärmeflusses und/oder an der Position $x_2$ auch der Temperaturverlauf gemessen. In einer weiteren bevorzugten Ausführung wird an mindestens einer weiteren Position $x_3$ der Temperaturverlauf und/oder der Verlauf des Wärmeflusses gemessen.

Bevorzugt wird der Verlauf der Oberflächentemperatur des Belages und/oder der Verlauf der Wärmestromdichte an der brennkammerseitigen Oberfläche bei x=0 gemessen.

Bevorzugt ist auch die Messposition zwischen Heizfläche und Belag bei $x=\delta_B$. Diese Messung erfolgt insbesondere an der der Brennkammer abgewandten Seite der Heizfläche, wobei die Einflüsse der Heizfläche, die zumindest aus Messungen im sauberen Zustand der Heizfläche einfach bestimmt werden können oder bekannt sind, aus den Messdaten eliminiert werden.

Auf diese Weise ist ein Zugang zu den betreffenden Messgeräten und zum Beispiel eine Wartung auch während des Betriebs der Feuerung möglich.

Essentiell ist, dass sich die Messpositionen zumindest zweier Messungen an unterschiedlichen Stellen des Belages oder dessen Oberfläche befinden. Im folgenden wird zur Verbesserung der Übersichtlichkeit auch von 'Temperatur' statt 'Temperaturverlauf und 'Wärmefluss' oder 'Wärmestrom' statt 'Verlauf des Wärmeflusses' gesprochen.

Der Begriff 'Verlauf' besagt, dass innerhalb eines Zeitintervalls $\tau$ mindestens zwei Messungen zu verschiedenen Zeiten durchgeführt werden, jedoch ist es von großem Vorteil, mehr Messungen als zwei durchzuführen.

Es werden dabei vorzugsweise im Zeitintervall $\tau$ ausreichend diskrete Messwerte zu verschiedenen Zeiten $t_i$ gemessen, um die betreffenden Kurvenverläufe nachzubilden, vorzugsweise mehr als 5 besonders bevorzugt mehr als 10, insbesondere mehr als 100.

Es ist jedoch auch möglich, und bei schnellen Auswertungen bevorzugt, die Messungen so zu gestalten, dass zumindest der Nulldurchgang der Schwingung und deren Amplitude ermittelt werden.

Der Fachmann kennt ausreichende Verfahren, dies zu bewerkstelligen. Zum Beispiel kann ein Verlauf mit zumindest einem Messwert pro Sekunde durchgeführt werden, wobei insbesondere nur Messwerte zur Berechnung der betreffenden Größen verwendet werden, die den Nulldurchgang und die Amplitude ermitteln lassen.

Die Messungen von Temperatur und Wärmestrom sollten dabei bevorzugt so vorgenommen werden, dass der Einfluss eines Kühl- oder Heizmediums, welches in oder an der Heizfläche erwärmt bzw. abgekühlt wird, möglichst gering ist.

In einer bevorzugten Ausführungsform wird eine Laplace- oder Fourierzerlegung der gemessen Verläufe für das Zeitintervall $\tau$ durchgeführt. Für mindestens eine Kreisfrequenz der daraus ermittelten Teilschwingungen werden nun die folgenden Berechnungen durchgeführt. Vorzugsweise werden die Berechnungen jedoch für mehrere verschiedene Teilschwingungen mit deren Kreisfrequenzen durchgeführt und die ermittelten Werte danach rücktransformiert. Auf diese Weise ist es möglich, auch für nichtperiodische Schwingungen der Verbrennungsleistung bzw. der auf die Heizfläche wirkenden Wärmeleistung die Belagseigenschaften zu ermitteln. Auf diese Weise können Wärmeschwankungen, wie sie bei einer normalen Verbrennung jederzeit vorkommen können, für das Verfahren ausgenutzt werden.

In einer weiteren bevorzugten Ausführungsform wird während dieses Zeitintervalls $\tau$ die Leistung der Feuerung innerhalb der Brennkammer, bzw. der Wärmeeintrag auf die Heizfläche (Wärmeleistung) periodisch erhöht und wieder verringert.

Bevorzugte Verläufe der Wärmeleistung für den Nachweis der Funktionalität dieses Messverfahrens haben zunächst den Verlauf einer harmonischen Schwingung, die beispielsweise eine Sinusfunktion, Sägezahn- Dreiecks- oder Rechteckfunktion sein kann.

Insbesondere wird die Wärmeleistung bei gleicher Stöchiometrie variiert, vorzugsweise in Form einer rechteckförmigen Schwingung der adiabaten Flammentemperatur. Für die Rauchgastemperatur ergibt sich daraus näherungsweise eine Sägezahnkurve.

Bevorzugte Perioden solcher Funktionen liegen in einem Bereich, in dem sie nicht durch die Dämpfung des Belags selbst nahezu vollständig herausgefiltert werden, d. h. von 1 s bis 1 Tag, bevorzugt zwischen 1 Minute und 1 Stunde, besonders bevorzugt zwischen 5 Minuten und 30 Minuten.

Innerhalb des Zeitintervalls $\tau$ befindet sich bei variierter Wärmeleistung bevorzugt mindestens eine Periode derselben.

In einer weiteren bevorzugten Ausführung wird sowohl der Wärmeeintrag auf die Heizfläche gezielt variiert, als auch eine Laplace- oder Fouriertransformation der Messwerte durchgeführt wird.

Eine bevorzugte Messmethode, die aus der gemessenen Temperatur den Wärmefluss bestimmen lässt, ist aus EP 1 760 441 B1 zu entnehmen. Weitere bevorzugte Messmethoden sind Messungen mit Thermoelementen oder Infrarotkameras.

Insbesondere ist es vorteilhaft, die Temperaturmessung von $\vartheta_0(\tau)$ durch eine Infrarotkamera zu bestimmen, welche die der Brennkammer zugewandte Seite der Heizfläche aufnimmt.

Nach diesem Schritt stehen die Messwerte der Verläufe der Temperatur und des Wärmeflusses an zumindest zwei verschiedenen Positionen $x_1$ und $x_2$ zur Verfügung. Es ist dabei essentiell, dass diese Verläufe Aufschluss über die Phasenbeziehungen untereinander, die jeweiligen Amplituden und die jeweiligen Mittelwerte geben.

In einem zweiten Schritt wird durch Vergleich der Phasen der gemessenen Temperaturen und dem gemessenen Wärmefluss die Phasenverschiebung $\Delta\varphi$ zwischen Verläufen bei unterschiedlichen Positionen x berechnet.

Aus der Phasenverschiebung wird $\xi$ ermittelt.

Ebenfalls wird der Wärmeeindringkoeffizienten b aus dem Amplitudenvergleich der Verläufe der Temperatur und des Wärmeflusses bei gleichen oder unterschiedlichen Messpositionen ermittelt.

In dem folgenden Schritt wird aus dem Wärmeeindringkoeffizienten b, vorzugsweise mit Hilfe von $\xi$, die Wärmeleitfähigkeit $\lambda$ unter Annahme der Schichtdicke des Belags bestimmt.

$$\lambda = \frac{\delta_B}{\xi} b \sqrt{\frac{\omega}{2}}.$$

Alternativ wird die Schichtdicke $\delta_B$

$$\delta_B = \frac{\lambda}{\dot{q}_m}\left(\vartheta_{m,B,a} - \vartheta_{m,B,i}\right)$$

des Belags nach Annahme der Wärmeleitfähigkeit $\lambda$ aus Umformung der Gleichung zur Berechnung des mittleren Wärmeflusses über die aus den Messwerten gebildete mittlere Wärmestromdichte $\dot{q}_m$ durch die Membranwand sowie den mittleren Temperaturen an der Belagsoberfläche $\vartheta_{m,B,a}$ und zwischen Belag und Membranwandaufbau $\vartheta_{m,B,i}$ berechnet.

Eine der Größen Schichtdicke $\vartheta_B$ oder Wärmeleitfähigkeit $\lambda$ wird dabei bevorzugt durch Vergleich mit Referenzwerten erhalten, geschätzt oder direkt/indirekt gemessen.

Besonders bevorzugt werden die Größen aus den oben genannten Formeln aus Messungen an mindestens einer weiteren Position $x_3$ ermittelt.

In einem folgenden Schritt wird $\alpha$ nach entsprechender Umformungen der Gleichung zur Berechnung von $\xi$ berechnet.

In einem optional folgenden Schritt wird aus $\alpha$ oder b gemäß der oben geschilderten Zusammenhänge die volumetrische Wärmekapazität $\rho \cdot c$ ermittelt.

In einem anderen bevorzugten Schritt wird die volumetrische Wärmekapazität $\rho \cdot c$ wie folgt ermittelt:

Zunächst wird die Wärmestromdichte über die Messzeit integriert. Es ergibt sich der Wärmeeintrag je Flächeneinheit, bezogen auf die Oberfläche in J/m$^2$. Dieser wird nach dem Ort x abgeleitet. Es ergibt sich daraus die volumetrische Wärmemenge in J/m$^3$.

Nachdem dieser Wert durch die mittlere Temperaturdifferenz zwischen Belagsoberfläche und Übergang zum Wandaufbau auf der anderen Seite des Belags geteilt wird, ergibt sich ebenfalls $\rho \cdot c$.

Mit den ermittelten Größen lässt sich der Belag durch Vergleich mit Referenzwerten bestimmen. Dies geschieht vorzugsweise dadurch, dass die ermittelten Werte mit Werten einer Datenbank, in der die entsprechenden Größen von unterschiedlichen Belägen gespeichert sind, verglichen werden.

Im folgenden ist ein Beispiel zur Ausführung des erfindungsgemäßen Verfahren dargestellt.

Figur 1 zeigt ein Messsignal der Temperatur an einer Heizfläche über eine Zeitspanne mit und ohne Belag der Heizfläche.

Figur 2A zeigt das Frequenzspektrum einer Temperaturmessung einer Heizfläche mit Belag der Heizfläche.

Figur 2B zeigt das Frequenzspektrum einer Temperaturmessung einer sauberen Heizfläche.

Figur 3 zeigt die Auftragung von Messwerten eines praktischen Versuchs nach dem geschilderten Verfahren.

In einem Beispiel für das erfindungsgemäße Verfahren werden zumindest die Messwerte von $\vartheta_0(\tau)$ an der Heizflächenabgewandten Seite des Belages an der Position x=0 und der Wärmefluss $\dot{q}(x,\tau)$ bei x=$\delta_B$ zu verschiedenen Zeiten $t_i$ während des Zeitintervalls $\tau$ gemessen. Die Ergebnisse der Messung sind in Figur 3 dargestellt. Die Leistung der Heizfläche erwärmenden Feuerung ist dabei in Form einer Rechteckfunktion periodisch verändert worden.

Analoge Ergebnisse würden erreicht, wenn die Temperatur bei x=$\delta_B$ und der Wärmefluss bei x=0 gemessen würde.

Der Temperaturverlauf $\vartheta_0(\tau)$ ist der obere Sägezahn, der Verlauf des Wärmeflusses $\dot{q}(x,\tau)$ ist die untere Kurve. Die mittlere Temperatur an der Belagsoberfläche $\vartheta_{m,B,a}$ und der mittlere Wärmefluss $\dot{q}_m$ sind ebenfalls in Figur 3 wiedergegeben. Die obere schräge Linie entspricht $\vartheta_{m,B,a}$ und die untere $\dot{q}_m$.

Zunächst wird durch Vergleich der Phasen der gemessenen Temperaturen und dem gemessenen Wärmefluss die Phasenverschiebung $\Delta\varphi$ zwischen dem Temperaturverlauf $\vartheta_0(\tau)$ und $\dot{q}(x, \tau)$ berechnet.

Es gilt nach den obigen Ausführungen, dass

$$\Delta\varphi = -\xi + 0{,}25\pi \quad \text{und damit} \quad \xi = 0.25\pi - \Delta\varphi.$$

Nach dieser Gleichung wird aus der Phasenverschiebung in diesem Beispiel $\xi$ ermittelt.

Der Wärmeeindringkoeffizienten b ergibt sich aus dem Amplitudenvergleich der Temperatur in der Brennkammer $\vartheta_0(\tau)$ und des Wärmeflusses $\dot{q}(x,\tau)$ während des Zeitintervalls $\tau$ nach der Formel

$$b = \frac{\hat{\dot{q}}(\delta_B, \tau_2)}{\hat{\vartheta}(0, \tau_1)} \sqrt{\frac{1}{\omega}} e^{\xi}$$

Die entsprechenden Amplituden sind in Figur 3 mit $\Delta q$ (Wärmefluss) und $\Delta\Theta$ (Temperatur) bezeichnet.

Wird nun die Dicke des Belages $\delta_B$ geschätzt oder durch Vergleich, Berechnung oder weitere Messungen ermittelt, lassen sich die weiteren Größen berechnen.

**Patentansprüche**

1. Verfahren zur Charakterisierung von Belagseigenschaften auf Wärmeübertragungsflächen in Dampferzeugern durch Messungen an Belägen auf Heizflächen, **gekennzeichnet durch** die Schritte:

   - Messung des Temperaturverlaufs $\vartheta_0(\tau)$ über ein Zeitintervall $\tau$ an mindestens einer Position $x_1$ und des Verlaufs des Wärmeflusses $q(x, \tau)$ an mindestens einer weiteren Position $x_2$, wobei die verschiedenen Messpositionen relativ zur Dicke eines Belags an einer Heizfläche unterschiedliche Positionen innerhalb des Belages oder an dessen Oberfläche darstellen,

- Ermittlung der Phasenverschiebung $\Delta\varphi$ zwischen den gemessenen Verläufen eines Temperaturverlaufs $\vartheta_0(\tau)$ und eines Wärmeflusses $\dot{q}(x, \tau)$, den jeweiligen Amplituden und den jeweiligen Mittelwerten bei einer Kreisfrequenz w der Schwingung oder Teilschwingung eines Wärmeeintrags,

- Ermittlung von $\xi$ aus der Phasenverschiebung $\Delta\varphi$ zwischen dem Temperaturverlauf und dem Verlauf des Wärmeflusses bei unterschiedlichen Positionen und Ermittlung des Wärmeeindringkoeffizienten b aus dem Amplitudenvergleich mindestens zweier Verläufe des Temperaturverlaufs und des Wärmeflusses an gleichen oder unterschiedlichen Messpositionen,

- Berechnung der Wärmeleitfähigkeit $\lambda$ des Belags unter Annahme der Schichtdicke $\delta_B$ des Belags oder der Schichtdicke $\delta_B$ des Belags unter Annahme der Wärmeleitfähigkeit $\lambda$, **durch** Vergleich mit Referenzwerten, oder Berechnung beider Größen aus den gemessenen Verläufen,

- Berechnung des Wärmeübergangskoeffizienten $\alpha$ aus den vorangehend berechneten Größen.

2. Verfahren nach Anspruch 1, **dadurch gekennzeichnet, dass** zusätzlich an der Position $x_1$ auch der Verlauf des Wärmeflusses und/oder an der Position $x_2$ auch der Temperaturverlauf gemessen wird und vorzugsweise an mindestens einer weiteren Position $x_3$ der Temperaturverlauf und/oder der Verlauf des Wärmeflusses gemessen wird, wobei die verschiedenen Messpositionen relativ zur Dicke eines Belags an einer Heizfläche unterschiedliche Positionen innerhalb des Belages oder an dessen Oberfläche darstellen.

3. Verfahren nach einem der vorangehenden Ansprüche, **dadurch gekennzeichnet, dass** die Heizfläche den Bereich einer Brennkammer zu einem anderen Bereich abschließt und der Verlauf der Oberflächentemperatur des Belages und/oder der Verlauf der Wärmestromdichte an der brennkammerseitigen Oberfläche bei $x=\delta_B$ und/oder $x=0$ gemessen wird, wobei im ersteren Fall die Messung insbesondere an der der Brennkammer abgewandten Seite der Heizfläche erfolgt, wobei die Einflüsse der Heizfläche, die zumindest aus Messungen im sauberen Zustand der Heizfläche einfach bestimmt werden können oder bekannt sind, bevorzugt aus den Messdaten eliminiert werden.

4. Verfahren nach einem der vorangehenden Ansprüche, **dadurch gekennzeichnet, dass** eine der Größen Schichtdicke $\delta_B$ oder Wärmeleitfähigkeit $\lambda$ durch Vergleich mit Referenzwerten erhalten wird, geschätzt wird oder direkt/indirekt gemessen wird, und dass sie bevorzugt aus mindestens einer weiteren Messung an mindestens einer weiteren Position $x_3$ ermittelt wird, wobei die verschiedenen Messpositionen relativ zur Dicke eines Belags an einer Heizfläche unterschiedliche Positionen innerhalb des Belages oder an dessen Oberfläche darstellen.

5. Verfahren nach einem der vorangehenden Ansprüche, **dadurch gekennzeichnet, dass** in einem folgenden Schritt aus $\alpha$ oder b die volumetrische Wärmekapazität $\rho \cdot c$ ermittelt wird.

6. Verfahren nach einem der vorangehenden Ansprüchen, **dadurch gekennzeichnet, dass** während der Messung der Verläufe der Temperatur und des Wärmeflusses der Belag auf der Heizfläche über das Zeitintervall $\tau$ periodisch variiert erwärmt wird, wobei die Kreisfrequenz $\omega$ dieser periodischen Erwärmung ist.

7. Verfahren nach einem der vorangehenden Ansprüche, **dadurch gekennzeichnet, dass** die Kreisfrequenz w aus mindestens einem der gemessenen Verläufe der Temperaturen und Wärmeflüsse ermittelt wird und vorzugsweise die gemessenen Verläufe, vorzugsweise durch eine Laplace- oder Fourierzerlegung, in eine Schwingung mit Kreisfrequenz $\omega$ oder zwei oder mehrere Teilschwingungen mit jeweils unterschiedlicher Kreisfrequenz zerlegt werden und die Berechnung zumindest der Größe $\alpha$ zumindest auf der Basis von einer der Teilschwingungen durchgeführt wird und vorzugsweise nach einem der Rechenschritte für die Berechnung eine Rücktransformation durchgeführt wird.

**Claims**

1. A method for characterizing the properties of deposits on heat transfer surfaces in steam generators by means of measurements at the deposits on heating surfaces, **characterised by** the steps of:

- measuring the temperature profile $\vartheta_0(\tau)$ over a time interval $\tau$ at at least one position $x_1$, and the profile of the heat flow $\dot{q}(x, \tau)$ at at least one further position $x_2$, wherein the different measurement positions represent, relative to the thickness of a deposit on a heating surface, different positions within the deposit or on the surface thereof;

- determining the phase shift $\Delta\varphi$ between the measured profiles of a temperature profile $\vartheta_0(\tau)$ and a heat flow

$\dot{q}(x, \tau)$, the respective amplitudes and the respective mean values at an angular frequency $\omega$ of the oscillation or partial oscillation of a heat input;

- determining $\xi$ from the phase shift $\Delta\varphi$ between the temperature profile and the profile of the heat flow at different positions, and determining the heat penetration coefficient b from the comparison of amplitudes of at least two profiles of the temperature profile and the heat flow at the same or different measurement positions;
- calculating the heat conductivity $\lambda$ of the deposit assuming the layer thickness $\delta_B$ of the deposit, or calculating the layer thickness $\delta_B$ of the deposit assuming the heat conductivity X, by comparison with reference values, or calculating both quantities from the measured profiles;
- calculating the heat transfer coefficient $\alpha$ from the previously calculated quantities.

2. The method according to claim 1, **characterised in that**, in addition, at the position $x_1$ also the profile of the heat flow, and/or at the position $x_2$ also the temperature profile is measured, and that, preferably, at at least one further position $x_3$ the temperature profile and/or the profile of the heat flow is measured, wherein the different measuring positions represent, relative to the thickness of a deposit on a heating surface, different positions within the deposit or on the surface thereof.

3. The method according to any one of the preceding claims, **characterised in that** the heating surface shuts off the area of a combustion chamber towards another area, and that the profile of the surface temperature of the deposit and/or the profile of the heat flux density is measured on the combustion chamber-side surface at $x=\delta_B$ and/or $x=0$, wherein in the former case the measurement takes place, in particular, on the side of the heating surface facing away from the combustion chamber, wherein the influences of the heating surface, which can be easily determined at least from measurements in the clean state of the heating surface or which are known, are preferably eliminated from the measurement data.

4. The method according to any one of the preceding claims, **characterised in that** one of the quantities layer thickness $\delta_B$ and heat conductivity $\lambda$ is obtained by comparison with reference values, is estimated or is directly/indirectly measured, and that the said quantity is preferably determined from at least one further measurement at at least one further position **$x_3$,** wherein the different measuring positions represent different positions within the deposit or on the surface thereof, relative to the thickness of a deposit on a heating surface.

5. The method according to any one of the preceding claims, **characterised in that**, in a subsequent step, the volumetric heat capacity $\rho \cdot c$ is determined from $\alpha$ or b.

6. The method according to any one of the preceding claims, **characterised in that** during the measurement of the profiles of the temperature and the heat flow, the deposit on the heating surface is heated over the time interval $\tau$ with periodic variation, $\omega$ being the angular frequency of this periodic heating.

7. The method according to any one of the preceding claims, **characterised in that** the angular frequency $\omega$ is determined from at least one of the measured profiles of the temperatures and heat flows, and that, preferably, the measured profiles are decomposed, preferably by a Laplace or Fourier decomposition, into an oscillation with angular frequency $\omega$ or into two or more partial oscillations, each with a different angular frequency, and that the calculation of at least the quantity $\alpha$ is carried out at least on the basis of one of the partial oscillations, and that, preferably, following one of the calculation steps for the calculation, an inverse transformation is carried out.

**Revendications**

1. Procédé de caractérisation de propriétés de dépôts sur des surfaces de transfert de chaleur dans des générateurs de vapeur au moyen de mesures effectuées sur les dépôts sur les surfaces de chauffe, **caractérisé par** les étapes :

    - mesure de la courbe de température $\vartheta_0(\tau)$ pendant un intervalle de temps T à au moins une position $x_1$ et de la courbe du flux de chaleur $\dot{q}(x,\tau)$ à au moins une position supplémentaire $x_2$, les différentes positions de mesure par rapport à l'épaisseur d'un dépôt sur une surface de chauffe représentant différentes positions à l'intérieur du dépôt ou sur sa surface,
    - détermination du décalage de phase $\Delta\varphi$ entre les courbes mesurées d'une courbe de température $\vartheta_0(\tau)$ et d'un flux de chaleur $\dot{q}(x,\tau)$, entre les amplitudes respectives et les valeurs moyennes respectives avec une fréquence angulaire $\omega$ de l'oscillation ou de l'oscillation partielle d'un enregistrement de chaleur,
    - détermination de $\xi$ à partir du décalage de phase $\Delta\varphi$ entre la courbe de température et la courbe du flux de chaleur à différentes positions et détermination du coefficient de pénétration de chaleur b à partir de la comparaison d'amplitude au moins de deux courbes de la courbe de température et du flux de chaleur à des positions de mesure identiques ou différentes,
- calcul de la conductibilité thermique $\lambda$ du dépôt en supposant l'épaisseur de couche $\delta_B$ du dépôt ou l'épaisseur de couche $\delta_B$ du dépôt en supposant la conductibilité thermique $\lambda$, par comparaison avec des valeurs de référence, ou calcul des deux grandeurs à partir des courbes mesurées,
- calcul du coefficient de transfert de chaleur $\alpha$ à partir des grandeurs calculées auparavant.

2. Procédé selon la revendication 1, **caractérisé en ce qu'**en plus, la courbe du flux de chaleur est également mesurée à la position $x_1$ et/ou la courbe de température est également mesurée à la position $x_2$ et **en ce que** l'on mesure de préférence à au moins une position supplémentaire **$x_3$** de la courbe de température et/ou de la courbe du flux de chaleur, les différentes positions de mesure par rapport à l'épaisseur d'un dépôt sur une surface de chauffe représentant différentes positions à l'intérieur du dépôt ou sur sa surface.

3. Procédé selon l'une quelconque des revendications précédentes, **caractérisé en ce que** la surface de chauffe termine la zone d'une chambre de combustion vers une autre zone et **en ce que** la courbe de la température de surface du dépôt et/ou la courbe de la densité de flux de chaleur sur la surface côté chambre de combustion est mesurée avec $x = \delta_B$ et/ou $x = 0$, la mesure, dans le premier cas, ayant lieu en particulier sur le côté, détourné de la chambre de combustion, de la surface de chauffe, les influences de la surface de chauffe, qui peuvent être déterminées simplement tout du moins à partir de mesures à l'état propre de la surface de chauffe ou qui sont connues, étant éliminées de préférence des données de mesure.

4. Procédé selon l'une quelconque des revendications précédentes, **caractérisé en ce que** l'une des grandeurs épaisseur de couche $\delta_B$ ou conductibilité thermique $\lambda$ est obtenue par comparaison avec des valeurs de référence, est estimée ou est mesurée directement/indirectement, et **en ce qu'**elle est déterminée de préférence à partir d'au moins une mesure supplémentaire à au moins une position supplémentaire x3, les différentes positions de mesure par rapport à l'épaisseur d'un dépôt représentant différentes positions à l'intérieur du dépôt ou sur sa surface.

5. Procédé selon l'une quelconque des revendications précédentes, **caractérisé en ce que** dans une étape suivante, la capacité calorifique volumétrique p · c est déterminée à partir de $\alpha$ ou b.

6. Procédé selon l'une quelconque des revendications précédentes, **caractérisé en ce que** pendant la mesure des courbes de la température et du flux de chaleur, le dépôt sur la surface de chauffe est échauffé de manière variée périodiquement pendant l'intervalle de temps T, $\omega$ étant la fréquence angulaire de cet échauffement périodique.

7. Procédé selon l'une quelconque des revendications précédentes, **caractérisé en ce que** la fréquence angulaire w est déterminée à partir d'au moins une des courbes mesurées des températures et des flux de chaleur et **en ce que** de préférence les courbes mesurées sont analysées, de préférence au moyen d'une analyse de Laplace ou une analyse de Fourier, dans une oscillation avec fréquence angulaire w ou dans deux ou plusieurs oscillations partielles avec respectivement une fréquence angulaire différente et **en ce que** le calcul au moins de la grandeur $\alpha$ est réalisé au moins sur la base de l'une des oscillations partielles et **en ce qu'**une transformation inverse est réalisée de préférence après l'une des étapes de calcul utilisées pour le calcul.

EP 2 627 980 B1

## FIG. 1

## FIG. 2A

FIG. 2B

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1760441 B1

**In der Beschreibung aufgeführte Nicht-Patentliteratur**

- **GRÖBER ; HEINRICH ; ERK ; SIEGMUND ; GRIGULL.** Ulrich. Die Grundgesetze der Wärmeübertragung. Springer-Verlag, 1988